# EUROPÄISCHE PATENTSCHRIFT

(11) **EP 1 350 257 B1**
(45) Veröffentlichungstag und Bekanntmachung des Hinweises auf die Patenterteilung: **20.07.2005**
(21) Anmeldenummer: 01995584.8
(22) Anmeldetag: 06.12.2001
(51) Int. Cl.: H01F 7/00

(54) **ELEKTRISCHES VIELSCHICHTBAUELEMENT UND ENTSTÖRSCHALTUNG MIT DEM BAUELEMENT**
ELECTRIC MULTILAYER COMPONENT AND INTERFERENCE SUPPRESSION CIRCUIT WITH SAID COMPONENT
COMPOSANT MULTICOUCHE ELECTRIQUE ET CIRCUIT ANTIPARASITES POURVU D'UN TEL COMPOSANT

(30) Priorität: 22.12.2000 DE 10064447
(43) Veröffentlichungstag der Anmeldung: 08.10.2003
(73) Patentinhaber: EPCOS AG, 81669 München (DE)
(72) Erfinder: ENGEL, Günter, A-8430 Leibnitz (AT); GREIER, Günther, A-8042 Graz-St. Peter (AT); WITTMER, Walter, A-8530 Deutschlandsberg (AT)
(74) Vertreter: Epping Hermann & Fischer
(86) Internationale Anmeldenummer: PCT/DE2001/004591
(87) Internationale Veröffentlichungsnummer: WO 2002/052614

(56) Entgegenhaltungen:
- EP-A- 0 936 642
- DE-A- 19 931 056
- US-A- 5 430 605
- US-A- 5 815 367
- US-A- 5 870 273
- US-A- 5 880 925
- US-A1- 2001 035 810
- PATENT ABSTRACTS OF JAPAN vol. 2000, no. 01, 31. Januar 2000 (2000-01-31) & JP 11 288846 A (MATSUSHITA ELECTRIC IND CO LTD), 19. Oktober 1999 (1999-10-19)
- PATENT ABSTRACTS OF JAPAN vol. 013, no. 348 (E-799), 4. August 1989 (1989-08-04) & JP 01 107511 A (MURATA MFG CO LTD), 25. April 1989 (1989-04-25)
- PATENT ABSTRACTS OF JAPAN vol. 016, no. 224 (E-1206), 25. Mai 1992 (1992-05-25) & JP 04 038810 A (HITACHI LTD), 10. Februar 1992 (1992-02-10)

## Beschreibung

Die Erfindung betrifft ein elektrisches Vielschichtbauelement, das einen Grundkörper umfaßt, welcher miteinander verstapelte Elektrodenschichten einer ersten und einer zweite Sorte aufweist. Die Elektrodenschichten sind durch Dielektrikumschichten voneinander getrennt und bilden mindestens eine Kapazität. Auf Seitenflächen des Grundkörpers sind zwei Paare von Außenkontakten angeordnet. Die direkten Verbindungen der jeweils zu einem Paar gehörenden Außenkontakte überkreuzen einander. Das erste Paar von Außenkontakten ist mit den Elektrodenschichten der ersten Sorte und das zweite Paar von Außenkontakten mit den Elektrodenschichten der zweiten Sorte kontaktiert.

Aus den Druckschriften US 5,889,445 und US-A-5 815 367 sind Bauelemente der eingangs genannten Art bekannt, bei denen an den beiden Stirnseiten und an zwei Längsseiten jeweils ein Außenkontakt angeordnet ist. Diese Bauelemente sind dem Fachmann auch bekannt unter dem Namen "Feedthrough-Bauelemente". Die an den Stirnseiten angeordneten Außenkontakte werden durch Tauchen des Grundkörpers in eine elektrisch leitfähige Paste aufgebracht und liegen daher kappenförmig über den Stirnseiten des Grundkörpers. Aufgrund der Anordnung der Außenkontakte und der Art ihrer Herstellung hat das bekannte Bauelement den Nachteil, daß Abmessungen mit einer Länge von 2,0 mm und einer Breite von 1,25 mm nicht unterschritten werden können. Die Außenkontakte müssen nämlich einen Mindestabstand voneinander aufweisen, um das Auftreten von Kurzschlüssen durch Oberflächenströme zu verhindern.

Aktuelle Designs von Mobiltelefonen erfordern kleinere als die oben genannten Baugrößen, weswegen die bekannten Bauelemente nicht für diese Art von Anwendung in Betracht gezogen werden können.

Desweiteren haben die verhältnismäßig großen Abmessungen des bekannten Bauelements den Nachteil, daß daraus eine große parasitäre Induktivität resultiert, die sich negativ auf die Dämpfungseigenschaften des Bauelements auswirkt, welches als Störschutzbauelement zum Herausfiltern von Störfrequenzen in Mobiltelefonen verwendet wird.

Die bekannten Bauelemente können durch Einsatz von Varistorkeramiken in den Dielektrikumschichten als Varistoren verwendet werden. Auch in diesem Fall wirken sich die großen Abmessungen des Bauelements nachteilig aus, insbesondere im Hinblick auf parasitäre Induktivitäten sowie relativ hohe Klemmenspannungen bei steilflankigen Impulsen.

Das bekannte Bauelement hat ferner den Nachteil, daß zur Aufbringung der Außenkontakte vier verschiedene Seitenflächen des Grundkörpers beschichtet werden müssen, was einen entsprechend großen Aufwand, beispielsweise für das Drehen des Bauelementes bedeutet.

Ziel der vorliegenden Erfindung ist es daher, ein Bauelement der eingangs genannten Art anzugeben, das miniaturisierbar und leicht herzustellen ist.

Dieses Ziel wird erfindungsgemäß durch ein elektrisches Vielschichtbauelement nach Patentanspruch 1 erreicht. Weitere Ausgestaltungen der Erfindung sowie Entstörschaltungen mit dem erfindungsgemäßen Vielschichtbauelement sind den weiteren Ansprüchen zu entnehmen.

Die Erfindung gibt ein elektrisches Vielschichtbauelement an, das einen Grundkörper umfaßt, welcher miteinander verstapelte Elektrodenschichten einer ersten und einer zweiten Sorte umfaßt. Ferner weist der Grundkörper Dielektrikumschichten auf, die die Elektrodenschichten voneinander trennen, wodurch mindestens eine Kapazität gebildet wird. Auf gegenüberliegenden Seitenflächen des Grundkörpers sind zwei Paare von Außenkontakten angeordnet. Dabei befindet sich von jedem Paar jeweils ein Außenkontakt auf jeder Seitenfläche. Ferner sind die Außenkontakte so angeordnet, daß die direkten Verbindungen der jeweils zu einem Paar gehörenden Außenkontakte einander überkreuzen. Für die Erfindung kann beispielsweise ein quaderförmiger Grundkörper verwendet werden, womit durch Anordnung der Außenkontakte in der Nähe der Ecken des Quaders quasi ein diagonaler Durchführungspfad realisiert werden kann.

Das erste Paar von Außenkontakten ist mit Elektrodenschichten der ersten Sorte kontaktiert. Entsprechend ist das zweite Paar von Außenkontakten mit Elektrodenschichten der zweiten Sorte kontaktiert. In einer Elektrodenschicht der ersten Sorte ist eine leitende Schicht enthalten, die zwei Außenkontakte miteinander verbindet. Ferner ist in einer Elektrodenschicht der zweiten Sorte eine leitende Schicht enthalten, die mit einem der Außenkontakte verbunden ist.

Das erfindungsgemäße Vielschichtbauelement hat den Vorteil, daß die Außenkontakte nur auf zwei der Seitenflächen des Grundkörpers angeordnet sind. Dadurch sind sie besonders leicht herstellbar, da das Bauelement zum Aufbringen der Außenkontakte nur noch einmal gedreht werden muß. Ferner hat das erfindungsgemäße Vielschichtbauelement den Vorteil, daß durch die Anordnung der Außenkontakte auf zwei gegenüberliegenden Seitenflächen des Grundkörpers kleinere Bauformen möglich sind. Dies resultiert insbesondere daraus, daß die anderen Seitenflächen, die von Außenkontakten frei sind, als Abstandhalter zwischen Außenkontakte dienen können. Dadurch sind die Außenkontakte gut gegeneinander isoliert.

Kleinere Bauformen haben den Vorteil kleinerer parasitärer Induktivitäten, wodurch das erfindungsgemäße Vielschichtbauelement bessere Dämpfungseigenschaften für die Verwendung als Störschutzbauelement aufweist.

Falls ferner eine der Dielektrikumschichten als Varistorschicht ausgebildet ist, ergibt sich darüber hinaus der Vorteil einer verringerten Klemmenspannung durch die reduzierte Bauteilinduktivität.

In einer besonders vorteilhaften Ausführungsform der Erfindung sind die Außenkontakte auf ebenen Seitenflächen des Grundkörpers angeordnet. In diesem Fall sind die Außenkontäkte besonders leicht durch Aufdrucken einer Paste oder auch durch andere geeignete Maßnahmen auf den Grundkörper aufzubringen. Insbesondere können in diesem Fall die Außenkontakte einfach und kostengünstig durch Abrollen eines mit einem leitfähigen Material beschichteten Rades auf den ebenen Seitenflächen hergestellt sein. Diese einfache Möglichkeit der Herstellung der Außenkontakte bietet einen weiteren Vorteil, nämlich die Möglichkeit, räumlich exakt begrenzte Strukturen zu erzeugen, wodurch eine weitere Miniaturisierung des Bauelements möglich wird.

Bei Verwendung eines Grundkörpers mit einer Grund- und einer Deckfläche, wobei eine dieser Flächen zur Montage auf einer Leiterplatte vorgesehen ist, können die Außenkontakte besonders vorteilhaft auf denjenigen Seitenflächen des Grundkörpers angeordnet sein, die den geringsten Abstand voneinander aufweisen. Falls ein Grundkörper in Form eines Quaders verwendet wird, wären es die Breitseiten des Quaders, die die Außenkontakte tragen. Ein solches Bauelement hat den Vorteil einer noch niedrigeren Induktivität, da durch den geringen Abstand der Seitenflächen voneinander auch kurze Strompfade realisiert werden.

Eine solche Ausführung des erfindungsgemäßen Bauelements hat weiters den Vorteil, daß durch Verschmälern des Grundkörpers und gleichzeitiges Verlängern des Grundkörpers ohne Verzicht auf hohe Kapazitäten eine noch niedrigere parasitäre Induktivität realisiert werden kann.

Wenigstens eine der Dielektrikumschichten kann als Varistorschicht mit einem spannungsabhängigen Widerstand ausgeführt sein. Ein solches Bauelement hat den Vorteil, daß einer oder auch zwei Kondensatoren zusammen mit einem spannungsabhängigen Widerstand (VDR) in einem einzigen Bauelement integriert sind. Somit kann zusätzlich zur Störschutzfunktion auch noch eine Schutzfunktion gegenüber ESD (Electrostatic Discharge) realisiert werden.

Als Dielektrikumschicht kann beispielsweise eine sogenannte "C0G"-Keramik verwendet werden. Ein solches Material wäre beispielsweise eine (Sm, Ba)NdTiO₃-Keramik. Es kommt aber auch eine "X7R"-Keramik in Betracht, beispielsweise dotiertes Bariumtitanat. Als Varistorschicht mit spannungsabhängigem Widerstand eignet sich beispielsweise eine Zinkoxidkeramik mit gegebenenfalls Dotierungen von Praseodym oder Wismutoxid.

In einer Ausführungsform der Erfindung, bei der in dem Vielschichtbauelement eine einzige Kapazität enthalten ist, ist die Elektrodenschicht der zweiten Sorte so ausgeführt, daß sie eine leitende Schicht enthält, welche zwei Außenkontakte miteinander verbindet.

In einer weiteren Ausführungsform kann das erfindungsgemäße Vielschichtbauelement auch zwei Kapazitäten enthalten, wobei in einer Elektrodenschicht der zweiten Sorte zwei voneinander beabstandete leitende Schichten enthalten sind, die mit jeweils einem Außenkontakt verbunden sind und die zwei voneinander getrennten Kapazitäten angehören.

Für den Fall, daß das erfindungsgemäße Bauelement zwei Kapazitäten enthält, ist es besonders vorteilhaft, wenn in einer Elektrodenschicht der ersten Sorte zwei voneinander beabstandete leitende Schichten enthalten sind, die mit jeweils einem Außenkontakt elektrisch leitend verbunden sind. Ferner sind die voneinander beabstandeten leitenden Schichten untereinander durch eine Widerstandschicht verbunden. Dadurch kann eine π-Schaltung realisiert werden, bei der zwei Kapazitäten durch einen Widerstand, repräsentiert durch die Widerstandschicht, miteinander verbunden sind. Eine solche π-Schaltung weist ein verbessertes Dämpfungsverhalten auf, wobei ein ganzes Frequenzband, das zwischen den beiden durch die Kapazitäten definierten Dämpfungsfrequenzen verläuft, bedämpft werden kann.

In einer Variante dieser Ausführungsform kann die Elektrodenschicht der ersten Sorte auch als ganzes als Widerstandschicht ausgebildet sein, die zwei Außenkontakte miteinander verbindet.

In einer weiteren Variante dieser Ausführungsform kann auf der Oberfläche des Grundkörpers eine Widerstandschicht angeordnet sein, die das erste Paar von Außenkontakten miteinander verbindet.

Weiterhin ist es besonders vorteilhaft, wenn bei dem Bauelement eine leitende Schicht und/oder eine Widerstandschicht mit wenigstens einer Engstelle versehen ist. Durch das Einführen einer oder mehrerer Engstellen gelingt ein gezieltes Einstellen der elektrischen Eigenschaften des Bauelements. Solche elektrischen Eigenschaften, die durch das Einführen einer Engstelle eingestellt werden können, sind beispielsweise die Induktivität, der elektrische Widerstand oder auch die Kapazität. Dadurch läßt sich die für die Dämpfung benötigte Resonanzkurve des Bauelements in eine geeignete Form bringen.

Die Widerstandschicht, die gegebenenfalls in dem erfindungsgemäßen Bauelement enthalten ist, kann vorteilhaft aus einer Ruthenium enthaltenden Paste hergestellt sein. Üblicherweise wird für die Herstellung der leitenden Schichten eine Silberpaste verwendet. Durch das Beifügen von Ruthenium zur Silberpaste erhöht sich der elektrische Widerstand, wobei das Ruthenium ansonsten die vorteilhaften Eigenschaften des Silbers in der Paste nicht weiter beeinträchtigt.

Das erfindungsgemäße Bauelement kann besonders vorteilhaft durch Sintern eines Stapels von übereinanderliegenden keramischen Grünfolien hergestellt sein. Dadurch entsteht ein monolithisches, kompaktes Bauelement, das sehr schnell und einfach in großen Stückzahlen hergestellt werden kann.

In einer weiteren, vorteilhaften Ausführungsform der Erfindung sind gleiche Elektrodenschichten der ersten Sorte abwechselnd mit gleichen Elektrodenschichten der zweiten Sorte verstapelt. Ein solches vereinfachtes Design des Bauelements hat den Vorteil, daß es leicht zu realisieren ist. Durch das abwechselnde Verstapeln von Elektrodenschichten, entstehen kammartige, ineinandergeschobene Strukturen, die parallelgeschaltete Kapazitäten bilden. Dadurch kann bei sehr kleinen äußeren Abmessungen des Bauelements eine maximale Kapazität erreicht werden.

Die Flächen der leitenden Schichten der Elektrodenschichten der ersten Sorte und der zweiten Sorte können um weniger als 10 % voneinander abweichen, wodurch ein Vielschichtbauelement mit zwei annähernd gleichen Kapazitäten realisiert werden kann.

Es kann aber auch ein Bauelement mit verschiedenen Kapazitäten realisiert werden, indem die Flächen der leitenden Schichten in der Elektrodenschicht der ersten Sorte um mehr als 20 % voneinander abweichen. Dies resultiert daraus, daß die Größe der Kapazität im wesentlichen durch die Fläche der Elektroden des Kondensators vorgegeben ist.

Das erfindungsgemäße Bauelement kann insbesondere in einer miniaturisierten Form ausgeführt sein, wobei die Grundfläche des Grundkörpers weniger als 2,5 mm² beträgt. Eine solche Grundfläche ließe sich beispielsweise durch eine Bauform des Grundkörpers realisieren, bei der die Länge 1,25 mm und die Breite 1,0 mm beträgt. Diese Bauform ist auch unter dem Namen "0405" bekannt.

Desweiteren gibt die Erfindung eine Entstörschaltung mit einem erfindungsgemäßen Bauelement an, bei der das Bauelement zusammen mit einem gleichen weiteren Bauelement auf einer Leiterplatte angeordnet ist. Die mit Außenkontakten versehenen Außenflächen der Grundkörper der Bauelemente stehen senkrecht zu Leiterbahnen der Leiterplatte, welche ihrerseits entlang drei paralleler Geraden verlaufen. Jeweils zwei der Außenkontakte sind entlang der beiden äußeren Geraden und vier Außenkontakte sind entlang der inneren Gerade angeordnet. Dadurch entsteht eine sehr kompakte Anordnung, die das Entstören von zwei Leitungen mit einem äußerst geringen Platzbedarf ermöglicht.

In einer weiteren vorteilhaften Weiterbildung der erfindungsgemäßen Entstörschaltung umfassen die,Leiterbahnen eine Masseleitung, die jeweils am äußeren Rand der drei Leiterbahnen verläuft und die die beiden anderen Leiterbahnen in den Bauelementen kreuzt. Eine solche Schaltung hat den Vorteil, daß die Masse von einer Außenseite auf die andere geführt wird und dadurch leicht und mit sehr wenig Platzbedarf beispielsweise an den Masseanschluß eines geschirmten Steckers angeschlossen werden kann.

Im folgenden wird die Erfindung anhand von Ausführungsbeispielen und den dazugehörigen Figuren näher erläutert:
- Figur 1: zeigt beispielhaft ein erfindungsgemäßes Bauelement im schematischen Längsschnitt.
- Figur 2: zeigt den Schnitt D-D von Figur 1.
- Figur 3: zeigt den Schnitt F-F von Figur 1.
- Figur 4: zeigt den Schnitt F-F eines weiteren Ausführungsbeispiels eines Bauelements gemäß Figur 1.
- Figur 5: zeigt den Schnitt F-F eines weiteren Ausführungsbeispiels eines Bauelements gemäß Figur 1.
- Figur 6: zeigt schematisch ein Ersatzschaltbild für das in Figur 1 dargestellte Bauelement.
- Figur 7: zeigt beispielhaft ein weiteres erfindungsgemäßes Bauelement im schematischen Längsschnitt.
- Figur 8: zeigt den Schnitt E-E von Figur 7.
- Figur 9: zeigt den Schnitt E-E einer weiteren Ausführungsform gemäß Figur 7.
- Figur 10: zeigt schematisch ein Ersatzschaltbild eines Bauelements gemäß Figur 7.
- Figur 11: zeigt den Schnitt D-D von Figur 7.
- Figur 12: zeigt den Schnitt D-D einer weiteren Ausführungsform gemäß Figur 7.
- Figur 13: zeigt schematisch ein Ersatzschaltbild eines Bauelements gemäß Figur 7 und Figur 11.
- Figur 14: zeigt schematisch ein Ersatzschaltbild eines weiteren Bauelements gemäß Figur 7 und Figur 11.
- Figur 15: zeigt schematisch das Dämpfungsverhalten eines Bauelements gemäß Figur 14.
- Figur 16: zeigt beispielhaft eine erfindungsgemäße Entstörschaltung in Draufsicht.

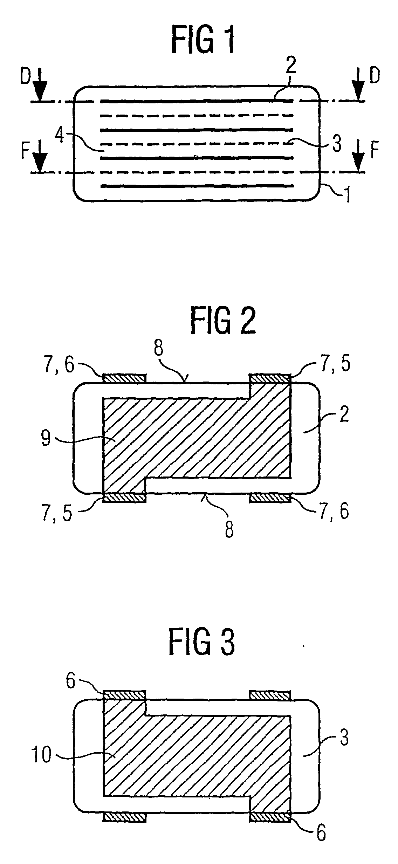

Die nicht mit Bezugszeichen versehenen Elemente der Figuren 3, 4, 5, 8, 9, 11 und 12 entsprechen den Elementen von Figur 2.
Figur 1 zeigt ein erfindungsgemäßes Bauelement im schematischen Längsschnitt mit einem Grundkörper 1 und mit Elektrodenschichten 2 der ersten Sorte und mit Elektrodenschichten 3 der zweiten Sorte. Die Elektrodenschichten 2 der ersten Sorte sind abwechselnd mit den Elektrodenschichten 3 der zweiten Sorte verstapelt. Zwischen den Elektrodenschichten 2, 3 sind Dielektrikumschichten 4 angeordnet. Durch eine geeignete Verschaltung an den Rändern des Bauelements läßt sich so eine Parallelschaltung von Teilkondensatoren realisieren, wodurch ein Kondensator mit einer vergleichsweise hohen Kapazität entsteht.

Figur 2 zeigt den Schnitt D-D von Figur 1. Die Elektrodenschicht 2 der ersten Sorte umfaßt eine leitende Schicht 9, die das erste Paar 5 von Außenkontakten 7 leitend miteinander verbindet. An den beiden einander gegenüberliegenden Seitenflächen 8 des Grundkörpers sind Außenkontakte 7 angeordnet. Die vier Außenkontakte 7 sind zu Paaren 5, 6 zusammengefaßt, wobei von jedem Paar 5, 6 ein Außenkontakt 7 auf jeder Seitenfläche 8 angeordnet ist.

Figur 3 zeigt den Schnitt F-F von Figur 1. Die in Figur 2 dargestellte Elektrodenschicht 3 der zweiten Sorte umfaßt eine leitende Schicht 10, welche das zweite Paar 6 von Außenkontakten miteinander verbindet. Die übrigen in Figur 3 dargestellten Elemente entsprechen den in Figur 2 dargestellten.

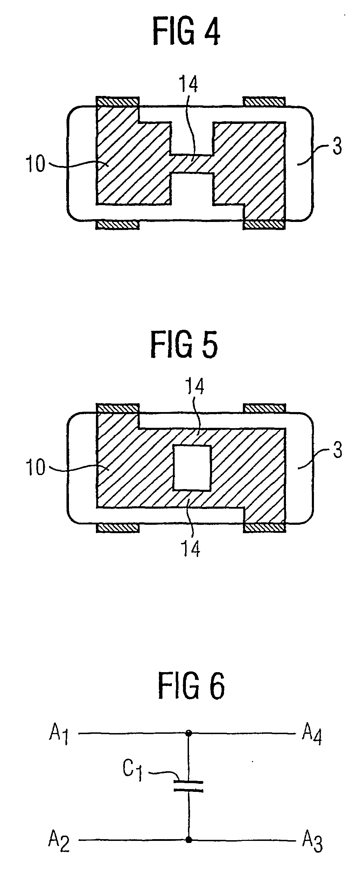

Figur 4 zeigt den Schnitt F-F in einer Variante von Figur 1. Die in Figur 4 dargestellte Elektrodenschicht 3 der zweiten Sorte weist eine leitende Schicht 10 mit einer etwa in der Mitte angeordneten Engstelle 14 auf.

Figur 5 zeigt den Schnitt F-F gemäß einer Variante von Figur 1. Die in Figur 5 dargestellte Elektrodenschicht 3 der zweiten Sorte weist eine leitende Schicht 10 mit zwei Engstellen 14 auf.

Figur 6 zeigt schematisch ein Ersatzschaltbild für ein Bauelement, welches gemäß Figur 1, Figur 2 und Figur 3 ausgebildet ist. Die Elektrodenschichten lassen sich durch die mit Hilfe der Außenkontakte realisierten Parallelschaltung zu einem Kondensator C₁ zusammenfassen. Die Anschlüsse A₁ bis A₄ aus Figur 6 lassen sich wie folgt den Außenanschlüssen 7 gemäß Figur 2 zuordnen: A₁ entspricht dem Außenkontakt 7 oben links. A₂ entspricht dem Außenkontakt 7 unten links. A₃ entspricht dem Außenkontakt 7 oben rechts und A₄ entspricht dem Außenkontakt 7 unten rechts.

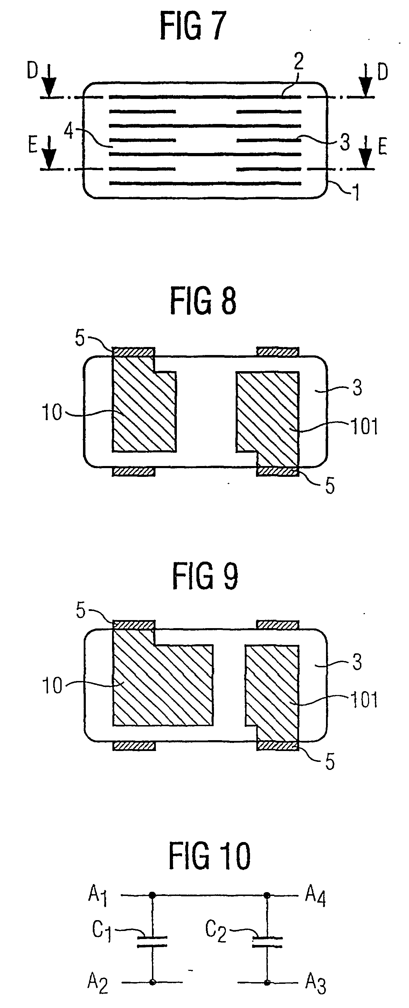

Figur 7 zeigt beispielhaft ein weiteres erfindungsgemäßes Bauelement mit zwei Kapazitäten im schematischen Längsschnitt. Die dargestellten Elemente entsprechen denen aus Figur 1. Im Unterschied zu Figur 1 haben die leitenden Schichten der Elektrodenschichten 2, 3 unterschiedliche Formen.

Beispielsweise können die Elektrodenschichten 2 der ersten Sorte so ausgeführt sein, wie sie gemäß dem Schnitt D-D in Figur 2 dargestellt sind. Die in Figur 2 dargestellte leitende Schicht 9 kann ebenso eine Schicht aus einer Widerstandspaste sein.

Figur 8 zeigt den Schnitt E-E von Figur 7. Die in Figur 8 dargestellte Elektrodenschicht 3 der zweiten Sorte umfaßt eine leitende Schicht 10 und eine leitende Schicht 101, welche jeweils mit einem Außenkontakt 7 des zweiten Paars 5 von Außenkontakten 7 leitend verbunden sind. Durch die Ausbildung der Elektrodenschicht 3 der zweiten Sorte gemäß Figur 8 kann ein Bauelement mit zwei Kapazitäten realisiert werden. Dabei gehören die leitenden Schichten 10 und 101 zu verschiedenen Kapazitäten. Die leitenden Schichten 10 und 101 weisen in etwa dieselbe Fläche auf, wodurch auch die beiden Kapazitäten ungefähr dieselbe Größe haben.

Figur 9 zeigt den Schnitt E-E von einer Variante von Figur 7. Die in Figur 9 dargestellte Elektrodenschicht 3 der zweiten Sorte umfaßt zwei leitende Schichten 10, 101, welche mit dem ersten Paar 5 von Außenkontakten verbunden sind. Die leitenden Schichten 10 und 101 weisen deutlich verschiedene Flächen auf, wodurch ein Vielschichtbauelement mit zwei verschiedenen Kapazitäten realisiert werden kann.

Figur 10 zeigt beispielhaft ein schematisches Ersatzschaltbild für ein Bauelement gemäß Figur 7. Die beiden Kapazitäten C₁ und C₂ sind zueinander parallel geschaltet. Die Zuordnung der Anschlüsse A₁ bis A₄ ergibt sich in analoger Weise, wie es in Figur 6 beschrieben wurde.

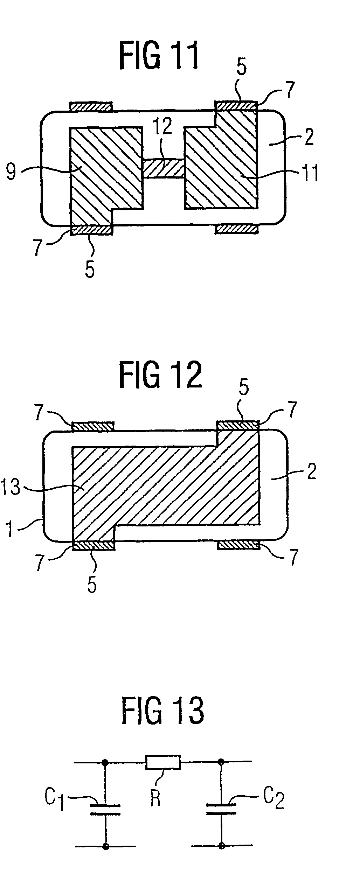

Figur 11 zeigt den Schnitt D-D einer Variante von Figur 7. Die in Figur 11 dargestellte Elektrodenschicht 2 der ersten Sorte weist eine leitende Schicht 9 auf, welche mit einem Außenkontakt 7 des ersten Paars 5 von Außenkontakten 7 verbunden ist. Desweiteren weist die Elektrodenschicht 2 der zweiten Sorte eine leitende Schicht 11 auf, welche mit dem anderen Außenkontakt 7 des ersten Paars 5 verbunden ist. Die leitenden Schichten 9, 11 sind untereinander durch eine Widerstandschicht 12 miteinander verbunden. Durch die Widerstandschicht 12 läßt sich eine π-Schaltung realisieren, wie sie in Figur 13 dargestellt ist, bei der zwei Kapazitäten C₁ und C₂ durch einen Widerstand R miteinander verbunden sind.

Figur 12 zeigt den Schnitt D-D von Figur 7 für eine Variante des erfindungsgemäßen Bauelements. Die in Figur 12 dargestellte Elektrodenschicht 2 der ersten Sorte weist eine Widerstandschicht 13 auf, die die Außenkontakte 7 des ersten Paares 5 miteinander verbindet. Im Gegensatz zu der in Figur 11 dargestellten Anordnung der Elektrodenschicht 2 der ersten Sorte wird also auf leitende Schichten ganz verzichtet. Auch gemäß der Figur 12 läßt sich ein π-Filter mit einem Widerstand, der zwei Kapazitäten miteinander verbindet, realisieren.

Figur 12 zeigt ein Bauelement gemäß Figur 7 in Draufsicht. Auf der Oberseite des Grundkörpers 1 ist eine Widerstandschicht 13 angeordnet, die das erste Paar 5 von Außenkontakten 7 miteinander verbindet. Die in Figur 12 dargestellte Variante zu Figur 11 kann ebenso wie eine im Innern des Bauelements angebrachte Widerstandspaste dazu verwendet werden, ein π-Filter gemäß Figur 13 zu realisieren.

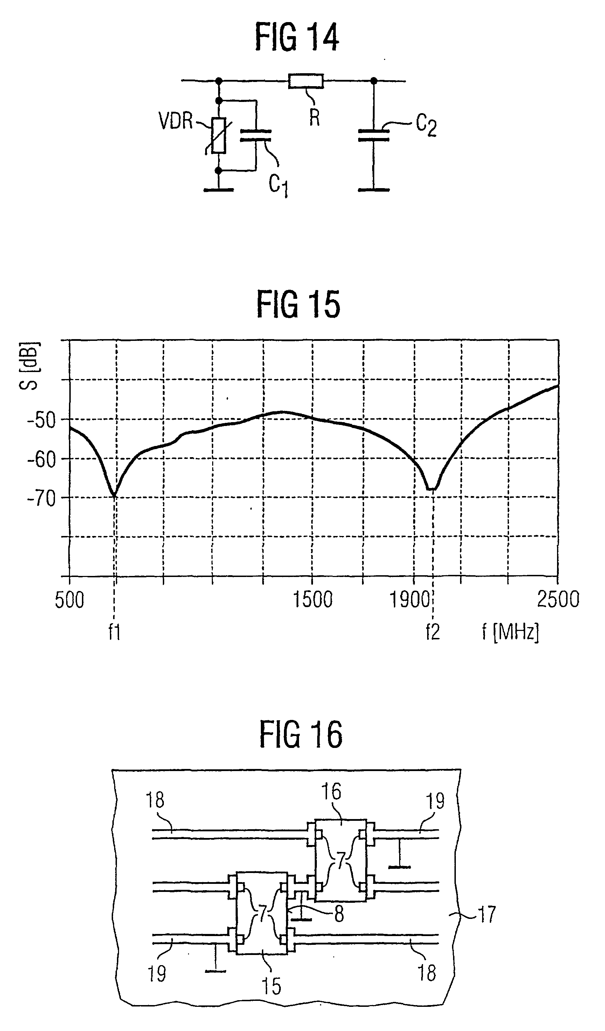

Figur 14 zeigt schematisch ein Ersatzschaltbild für ein erfindungsgemäßes Bauelement, das gemäß Figur 7, Figur 11 und Figur 9 ausgeführt ist. Ferner ist eine der Dielektrikumschichten als Varistorschicht ausgeführt. Durch eine entsprechende Gestaltung des Bauelements kann erreicht werden, daß C₁ = 60 pF und C₂ = 25 pF ist. Ferner wurde der Widerstand R zu 10 Ω gewählt.

Figur 15 zeigt die Einfügedämpfung des in Figur 14 dargestellten Bauelements. Die Einfügedämpfung S ist über der Frequenz f aufgetragen. Die durch die beiden Kapazitäten C₁, C₂ definierten Resonanzfrequenzen f₁, f₂ zeigen eine erhöhte Dämpfung. Auch zwischen den Resonanzfrequenzen f₁, f₂ weist das Bauelement aufgrund des die π-Schaltung realisierenden Widerstands R eine sehr gute Dämpfung auf, wodurch das Bauelement zum Entstören eines Frequenzbandes geeignet ist, welches zwischen der Resonanzfrequenzen f₁ (gehört zu C₁) und der Resonanzfrequenz f₂ (gehört zu C₂) liegt.

Die Kapazitäten C₁ und C₂ definieren jeweils die in Figur 15 dargestellten Resonanzfrequenzen f₁ und f₂.

Figur 16 zeigt eine erfindungsgemäße Entstörschaltung in Draufsicht. Auf einer Leiterplatte 17 sind ein erstes erfindungsgemäßes Bauelement 15 und ein zweites erfindungsgemäßes Bauelement 16 angeordnet. Die Außenkontakte 7 der Bauelemente 15, 16 sind entlang dreier parallel verlaufender Geraden angeordnet. Jeweils zwei Außenkontakte 7 sind entlang der äußeren Geraden angeordnet. Vier Außenkontakte 7 sind entlang der mittleren Gerade angeordnet. Entlang der Geraden verlaufen Leiterbahnen 18 auf der Leiterplatte 17. Auf der linken Seite ist die untere und auf der rechten Seite die obere der Leiterbahnen 18 als Masseleitung 19 ausgeführt. In den Bauelementen 15, 16 kreuzt die Masseleitung 19 die beiden anderen Leiterbahnen 18. Die in Figur 16 dargestellte Anordnung hat den Vorteil, daß sie sehr kompakt ist und daß die Masseleitung 19 jeweils am Rand der Gruppe von Leiterbahnen 18 geführt werden kann.

Die Erfindung beschränkt sich nicht auf die dargestellten Ausführungsbeispiele, sondern wird in ihrer allgemeinen Form durch Patentanspruch 1 definiert.

## Patentansprüche

1. Elektrisches Vielschichtbauelement
- mit einem Grundkörper (1), aufweisend miteinander verstapelte Elektrodenschichten (2, 3) einer ersten und einer zweiten Sorte, die durch Dielektrikumschichten (4) voneinander getrennt sind und welche mindestens eine Kapazität (C₁, C₂) bilden,
- bei dem der Grundkörper (1) zwei Paare (5, 6) von Außenkontakten (7) aufweist, die so auf gegenüberliegenden Seitenflächen (8) des Grundkörpers (1) angeordnet sind, daß sich von jedem Paar (5, 6) jeweils ein Außenkontakt (7) auf jeder Seitenfläche (8) befindet und daß die direkten Verbindungen der jeweils zu einem Paar (5, 6) gehörenden Außenkontakte (7) einander überkreuzen,
- bei dem das erste Paar (5) von Außenkontakten (7) mit Elektrodenschichten (2) der ersten und das zweite Paar (6) von Außenkontakten (7) mit Elektrodenschichten (3) der zweiten Sorte kontaktiert ist,
- bei dem in einer Elektrodenschicht (2) der erste Sorte eine leitende Schicht (9) enthalten ist, die zwei Außenkontakte (7) miteinander verbindet,
- und bei dem in einer Elektrodenschicht (3) der zweiten Sorte eine leitende Schicht (10) enthalten ist, die mit einem Außenkontakt (7) verbunden ist.

2. Bauelement nach Anspruch 1,
bei dem die Außenkontakte (7) auf ebenen Seitenflächen (8) angeordnet sind.

3. Bauelement nach Anspruch 1 bis 2,
bei dem die Außenkontakte (7) auf denjenigen nicht parallel zu den Elektrodenschichten (3) verlaufenden Seitenflächen (8) des Grundkörpers (1) angeordnet sind, die den geringsten Abstand voneinander aufweisen.

4. Bauelement nach Anspruch 1 bis 3,
bei dem wenigstens eine der Dielektrikumschichten (4) eine Varistorschicht mit spannungsabhängigem Widerstand ist.

5. Bauelement nach Anspruch 1 bis 4,
bei dem in einer Elektrodenschicht (3) der zweiten Sorte eine leitende Schicht (10) enthalten ist, die zwei Außenkontakte (7) miteinander verbindet.

6. Bauelement nach Anspruch 1 bis 4,
bei dem in einer Elektrodenschicht (3) der zweiten Sorte zwei voneinander beabstandete, leitende Schichten (10) enthalten sind, die mit jeweils einem Außenkontakt (7) verbunden sind und die zwei voneinander getrennten Kapazitäten (C₁, C₂) angehören.

7. Bauelement nach Anspruch 1 bis 6,
bei dem in einer Elektrodenschicht (2) der ersten Sorte zwei voneinander beabstandete leitende Schichten (9, 11) enthalten sind, die mit jeweils einem Außenkontakt (7) verbunden sind und die untereinander durch eine Widerstandschicht (12) verbunden sind.

8. Bauelement nach Anspruch 1 bis 7,
bei dem in einer Elektrodenschicht (2) der ersten Sorte eine Widerstandschicht enthalten ist, die zwei Außenkontakte (7) miteinander verbindet.

9. Bauelement nach Anspruch 1 bis 8,
bei dem auf der Oberfläche des Grundkörpers (1) eine Widerstandschicht (13) angeordnet ist, die das erste Paar (5) von Außenkontakten (7) miteinander verbindet.

10. Bauelement nach Anspruch 1 bis 9,
bei dem eine leitende Schicht (9, 10) und/oder eine Widerstandschicht (12) mit einer Engstelle (14) versehen ist.

11. Bauelement nach Anspruch 1 bis 10,
bei dem eine Widerstandschicht (12) aus einer Ruthenium enthaltenden Paste hergestellt ist.

12. Bauelement nach Anspruch 1 bis 11,
das durch Sintern eines Stapels von übereinanderliegenden keramischen Grünfolien hergestellt ist.

13. Bauelement nach Anspruch 1 bis 12,
bei dem gleiche Elektrodenschichten (2) der ersten Sorte abwechselnd mit gleichen Elektrodenschichten (3) der zweiten Sorte miteinander verstapelt sind.

14. Bauelement nach Anspruch 1 bis 13,
bei dem die Außenkontakte (7) durch Abrollen eines mit einem leitfähigen Material beschichteten Rades auf den Seitenflächen (8) hergestellt sind.

15. Bauelement nach Anspruch 7,
bei dem die Flächen der leitenden Schichten (10, 101) um weniger als 10% voneinander abweichen.

16. Bauelement nach Anspruch 7,
bei dem die Flächen der leitenden Schichten (10, 101) um mehr als 20% voneinander abweichen.

17. Bauelement nach Anspruch 1 bis 16,
bei dem die Grundfläche des Grundkörpers (1) weniger als 2,5 mm² beträgt.

18. Entstörschaltung mit einem Bauelement nach Anspruch 1 bis 17,
- bei der das Bauelement (15) zusammen mit einem gleichen weiteren Bauelement (16) auf einer Leiterplatte (17) angeordnet ist,
- bei der die mit Außenkontakten (7) versehenen Außenflächen (8) der Grundkörper (1) senkrecht zu Leiterbahnen (18) stehen, die entlang drei paralleler Geraden verlaufen,
- und bei der jeweils zwei Außenkontakte (7) entlang der beiden äußeren und vier Außenkontakte (7) entlang der inneren Gerade angeordnet sind.

19. Schaltung mit Bauelementen nach Anspruch 14,
bei der die Leiterbahnen (18) eine Masseleitung (19) umfassen, die am äußeren Rand der drei Leiterbahnen (18) verläuft und die die beiden anderen Leiterbahnen (18) in den Bauelementen (16, 17) kreuzt.

## Claims

1. Electrical multilayer component
- having a base body (1), having electrode layers (2, 3) which are stacked one on top of the other of a first and of a second sort, which are separated from one another by dielectric layers (4) and which form at least one capacitance (C₁, C₂),
- in which the base body (1) has two pairs (5, 6) of external contacts (7) which are arranged on opposite side surfaces (8) of the base body (1) in such a way, that one external contact (7) of each pair (5, 6) is located on each side surface (8), and in such a manner that the direct connections of the external contacts (7) which are each part of one pair (5, 6) cross over one another,
- in which the first pair (5) of external contacts (7) makes contact with electrode layers (2) of the first sort, and the second pair (6) of external contacts (7) makes contact with electrode layers (3) of the second sort,
- in which one electrode layer (2) of the first sort contains a conductive layer (9) which connects two external contacts (7) to one another,
- and in which one electrode layer (3) of the second sort contains a conductive layer (10) which is connected to one external contact (7).

2. Component according to Claim 1,
in which the external contacts (7) are arranged on planar side surfaces (8).

3. Component according to Claim 1 or 2,
in which the external contacts (7) are arranged on those side surfaces (8) of the base body (1) which do not run parallel to the electrode layers (3) and are at the shortest distance from one another.

4. Component according to Claims 1 to 3,
in which at least one of the dielectric layers (4) is a varistor layer with a voltage-dependent resistance.

5. Component according to Claims 1 to 4,
in which one electrode layer (3) of the second sort contains a conductive layer (10) which connects two external contacts (7) to one another.

6. Component according to Claims 1 to 4,
in which one electrode layer (3) of the second sort contains two conductive layers (10) which are separated from one another, are connected to in each case one external contact (7) and are part of two capacitances (C₁, C₂) which are separated from one another.

7. Component according to Claims 1 to 6,
in which one electrode layer (2) of the first sort contains two conductive layers (9, 11) which are separated from one another, are connected to in each case one external contact (7) and are connected to one another by means of a resistance layer (12).

8. Component according to Claims 1 to 7,
in which one electrode layer (2) of the first sort contains a resistance layer which connects two external contacts (7) to one another.

9. Component according to Claims 1 to 8,
in which a resistance layer (13) which connects the first pair (5) of external contacts (7) to one another is arranged on the surface of the base body (1).

10. Component according to Claims 1 to 9,
in which a conductive layer (9, 10) and/or a resistance layer (12) are/is provided with a constriction (14).

11. Component according to Claims 1 to 10,
in which a resistance layer (12) is produced from a paste containing ruthenium.

12. Component according to Claims 1 to 11,
which is produced by sintering of a stack of ceramic green films which are located one on top of the other.

13. Component according to Claims 1 to 12,
in which identical electrode layers (2) of the first sort are stacked alternately with identical electrode layers (3) of the second sort.

14. Component according to Claims 1 to 13,
in which the external contacts (7) are produced by rolling a wheel, which is coated with a conductive material, on the side surfaces (8).

15. Component according to Claim 7,
in which the surface areas of the conductive layers (10, 101) differ from one another by less than 10%.

16. Component according to Claim 7,
in which the surface areas of the conductive layers (10, 101) differ from one another by less than 20%.

17. Component according to Claims 1 to 16,
in which the base surface area of the base body (1) is less than 2.5 mm².

18. Suppression circuit having a component according to Claims 1 to 17,
- in which the component (15) is arranged together with an identical further component (16) on a printed circuit board (17),
- in which the external surfaces (8) of the base body (1), which are provided with external contacts (7), are at right angles to conductor tracks (18) which run along three parallel straight lines,
- and in which two external contacts (7) are in each case arranged along the two outer straight lines, and four external contacts (7) are in each case arranged along the inner straight line.

19. Circuit having components according to Claim 14,
in which the conductor tracks (18) include an earth line (19) which runs on the outer edge of the three conductor tracks (18) and crosses the two other conductor tracks (18) in the components (16, 17).

## Revendications

1. Composant multicouche électrique
- comprenant un corps (1) de base ayant des couches (2, 3) d'électrodes empilées les unes avec les autres, d'une première sorte et d'une deuxième sorte, qui sont séparées les unes des autres par des couches (4) de diélectrique et qui forment au moins une capacité (C₁, C₂) ;
- dans lequel le corps (1) de base a deux paires (5, 6) de contacts (7) extérieurs qui sont disposés sur des surfaces (8) latérales opposées du corps (1) de base, de manière à ce que, respectivement, un contact (7) extérieur de chaque paire (5, 6) se trouve sur chaque surface (8) latérale et de manière à ce que les liaisons directes des contacts (7) extérieurs appartenant, respectivement, à une paire (5, 6) se croisent l'une avec l'autre ;
- dans lequel la première paire (5) de contacts (7) extérieurs est mise en contact avec des couches (2) d'électrodes de la première paire et la deuxième paire (6) de contacts (7) extérieurs est mise en contact avec des couches (3) d'électrodes de la deuxième sorte ;
- dans lequel il est contenu dans une couche (2) d'électrodes de la première sorte une couche (9) conductrice qui relie entre eux les deux contacts (7) extérieurs ;
- et dans lequel il est contenu dans une couche (3) d'électrodes de la deuxième sorte une couche (10) conductrice qui est reliée à un contact (7) extérieur.

2. Composant suivant la revendication 1,
dans lequel les contacts (7) extérieurs sont disposés sur des surfaces (8) latérales planes.

3. Composant suivant la revendication 1 à 2,
dans lequel les contacts (7) extérieurs sont disposés sur les surfaces (8) latérales du corps (1) de base qui ne s'étendent pas parallèlement aux couches (3) d'électrodes et qui ont, entre elles, la distance la plus petite.

4. Composant suivant la revendication 1 à 3,
dans lequel au moins l'une des couches (4) de diélectriques est une couche de varistance à résistance qui varie en fonction de la tension.

5. Composant suivant la revendication 1 à 4,
dans lequel il est contenu dans une couche (3) d'électrodes de la deuxième sorte une couche (10) conductrice qui relie entre eux deux contacts (7) extérieurs.

6. Composant suivant la revendication 1 à 4,
dans lequel il est contenu dans une couche (3) d'électrodes de la deuxième sorte deux couches (10) conductrices à distance l'une de l'autre qui sont reliées à, respectivement, un contact (7) extérieur et qui appartiennent à deux capacités (C₁, C₂) séparées l'une de l'autre.

7. Composant suivant la revendication 1 à 6,
dans lequel il est contenu dans une couche (2) d'électrodes de la première sorte des couches (9, 11) conductrices à distance l'une de l'autre qui sont reliées à, respectivement, un contact (7) extérieur et qui sont reliées entre elles par une couche (13) de résistance.

8. Composant suivant la revendication 1 à 7,
dans lequel il est contenu dans une couche (2) d'électrodes de la première sorte une couche de résistance qui relie entre eux deux contacts (7) extérieurs.

9. Composant suivant la revendication 1 à 8,
dans lequel il est disposé à la surface du corps (1) de base une couche (13) de résistance qui relie entre eux la première paire (5) de contacts (7) extérieurs.

10. Composant suivant la revendication 1 à 9,
dans lequel une couche (9, 10) conductrice et/ou une couche (12) de résistance est munie d'un endroit (14) resserré.

11. Composant suivant la revendication 1 à 10,
dans lequel une couche (12) de résistance est fabriquée en une pâte contenant du ruthénium.

12. Composant suivant la revendication 1 à 11,
qui est produit par frittage d'une pile de feuilles à vert céramiques superposées.

13. Composant suivant la revendication 1 à 12,
dans lequel des couches (2) d'électrodes identiques de la première sorte sont empilées mutuellement en alternance avec des couches (3) d'électrodes identiques de la deuxième sorte.

14. Composant suivant la revendication 1 à 13,
dans lequel les contacts (7) extérieurs sont produits en faisant rouler une roue revêtue d'un matériau conducteur sur les surfaces (8) latérales.

15. Composant suivant la revendication 7,
dans lequel les surfaces des couches (10, 101) conductrices diffèrent l'une de l'autre de moins de 10 %.

16. Composant suivant la revendication 7,
dans lequel les surfaces des couches (10, 101) conductrices diffèrent l'une de l'autre de plus de 20 %.

17. Composant suivant la revendication 1 à 16,
dans lequel la surface de base du corps (1) de base est inférieure à 2,5 mm².

18. Circuit d'antiparasitage comprenant un composant suivant la revendication 1 à 17,
- dans lequel le composant (15) est disposé, ensemble avec un autre composant (16) identique, sur une plaquette (17) à circuit imprimé ;
- dans lequel les surfaces (8) extérieures, munies des contacts (7) extérieurs, du corps (1) de base sont perpendiculaires à des pistes (18) conductrices qui s'étendent suivant trois droites parallèles ;
- et dans lequel, respectivement, deux contacts (7) extérieurs sont disposés le long des deux droites extérieures et quatre contacts (7) extérieurs le long des droites intérieures.

19. Circuit comprenant des composants suivant la revendication 14,
dans lequel les pistes (18) conductrices comprennent une ligne (19) de masse qui s'étend sur le bord extérieur des trois pistes (18) conductrices et qui croisent les deux autres pistes (18) conductrices dans les composants (16, 17).
